# FASCICULE DE BREVET EUROPEEN

(11) **EP 0 888 910 B1**
(45) Date de publication et mention de la délivrance du brevet: **13.02.2002**
(21) Numéro de dépôt: 97401525.7
(22) Date de dépôt: 01.07.1997
(51) Int. Cl.: B60G 7/04, F16F 9/58, F16F 9/38

(54) **Dispositif à butée de limitation de course associée à un soufflet protecteur, en particulier pour amortisseur de véhicule**
Ein mit einem Schutzbalg zusammen arbeitender Anschlagpuffer,insbesondere für Fahrzeugstossdämpfer
Bump stop working in conjunction with protective bellows,especially for vehicle dampers

(43) Date de publication de la demande: 07.01.1999
(73) Titulaire: MICHELIN AVS, 78000 Versailles (FR)
(72) Inventeur: de Fontenay, Etienne, 58300 Decize (FR)
(74) Mandataire: Peuscet, Jacques

(56) Documents cités:
- EP-A- 0 545 765
- DE-A- 4 221 826
- DE-A- 4 307 445
- DE-A- 4 331 585
- DE-U- 1 909 244
- FR-A- 2 360 014
- US-A- 4 747 587
- PATENT ABSTRACTS OF JAPAN vol. 018, no. 147 (M-1575), 11 mars 1994 & JP 05 321971 A (BRIDGESTONE CORP), 7 décembre 1993,
- PATENT ABSTRACTS OF JAPAN vol. 017, no. 172 (M-1392), 2 avril 1993 & JP 04 331833 A (KINUGAWA RUBBER IND CO LTD), 19 novembre 1992,
- PATENT ABSTRACTS OF JAPAN vol. 015, no. 314 (M-1145), 12 août 1991 & JP 03 117736 A (KINUGAWA RUBBER IND CO LTD), 20 mai 1991,

## Description

L'invention est relative à un dispositif à butée de limitation de course associée à un soufflet protecteur, dispositif du genre de ceux dans lesquels la butée de limitation comporte au moins un élément élastique de compression traversé par une tige liée, à une extrémité, à un bâti par rapport auquel la butée est maintenue par un appui, tandis que du côté de son autre extrémité la tige peut coulisser dans un cylindre relié à un organe susceptible de se déplacer relativement au bâti, une extrémité du soufflet protecteur étant liée à la butée et l'autre extrémité du soufflet pouvant être entraînée par le cylindre lors des débattements afin de rester autour de la tige quelle que soit l'amplitude du débattement, ladite butée étant propre à limiter la course du cylindre en direction du bâti et à exercer une force de réaction sur ce cylindre en fin de course.

L'invention concerne plus particulièrement un tel dispositif à butée de limitation de course pour amortisseur de véhicule, la tige d'amortisseur étant liée au châssis du véhicule, tandis que le cylindre est constitué par le corps d'amortisseur lié à un support de la fusée de roue.

Un dispositif à butée de limitation de ce genre a déjà été décrit dans EP-B-0 545 765.

Dans un tel dispositif, lorsque la roue du véhicule est en position haute, le corps d'amortisseur vient comprimer la butée de limitation de course, généralement en matière élastomère, qui se trouve interposée, autour de la tige d'amortisseur, entre le châssis et le corps d'amortisseur. Cette butée s'écrase en absorbant de l'énergie et évite un choc brutal. Le taux de déformation admissible pour de telles butées est généralement compris entre 50 et 65 %.

Le soufflet, disposé autour de la tige, permet par son allongement d'assurer une protection permanente de la tige à l'égard des salissures et souillures. Ce soufflet est généralement accroché, par son extrémité haute, à la partie basse de la butée, ou même est intégré à cette butée pour ne former qu'une seule pièce avec elle. Comme montré dans EP-B-0 545 765, le soufflet comporte, à son extrémité éloignée de la butée, un anneau qui coulisse autour du corps d'amortisseur mais qui peut coopérer avec un redent que présente le corps d'amortisseur afin d'entraîner le soufflet par cet anneau pour l'étirer en vue de protéger la longueur de tige qui, lors d'un mouvement d'élongation, se dégage du corps d'amortisseur. En position normale de la roue, le bas du soufflet entoure librement une zone du corps d'amortisseur.

Un tel dispositif donne satisfaction quant à l'absorption de l'énergie en fin de course, tout en assurant une bonne protection de la tige d'amortisseur.

Pour obtenir une bonne progressivité d'absorption d'énergie, il convient que la butée de limitation soit comprimée sur une certaine distance. En outre, il y a nécessairement une hauteur résiduelle de la butée en compression maximale, ce qui impose, en position normale du dispositif lorsque la butée de limitation n'est pas comprimée, une hauteur de cette butée sensiblement égale à la hauteur résiduelle augmentée de la distance de compression ; la hauteur de la butée non comprimée est donc bien supérieure à la hauteur résiduelle.

Dans le cas d'un amortisseur, les contraintes évoquées ci-dessus imposent une hauteur déterminée par rapport au sol de l'attache de la tige d'amortisseur sur le châssis. Or on souhaite réduire cette hauteur, notamment pour pouvoir réaliser des capots plus plongeants dans un but aérodynamique.

Pour diminuer cette hauteur, on ne peut agir sur la longueur de l'amortisseur car celle-ci est déterminée par le débattement de la roue ; pour un débattement donné, on ne peut pas réduire la longueur de l'amortisseur car, pour le guidage de la tige à l'intérieur du corps, il faut une distance suffisante entre deux points. Si l'on veut donc un amortisseur suffisamment solide, il faut qu'il soit suffisamment long et il n'y a guère de possibilité de réduire sa longueur pour abaisser, relativement au sol, le point d'attache de la tige d'amortisseur sur le châssis.

Pour abaisser ce point d'attache on a donc envisagé de réduire l'épaisseur résiduelle de la butée en compression maximale. Mais en opérant de la sorte, dans un dispositif connu tel que celui de EP-B-0 545 765, on réduit la progressivité de l'absorption de l'énergie de fin de course.

Il est connu par DE-U-1909244 un système conforme au préambule de la revendication 1.

L'invention a pour but, surtout, de fournir un dispositif à butée de limitation de course qui permette de rapprocher le point d'attache de la tige relativement au cylindre, et dans le cas d'un amortisseur, d'abaisser le point d'attache de la tige d'amortisseur relativement au sol, tout en conservant et même améliorant la progressivité de l'absorption de l'énergie de fin de course. Il est souhaitable, en outre, qu'un tel dispositif à butée de limitation de course reste d'une construction simple et économique.

Selon l'invention, un dispositif à butée de limitation de course associée à un soufflet protecteur, du genre défini précédemment, est conforme à la revendication 1.

Ainsi, selon l'invention, au lieu de réaliser un appui direct du cylindre contre la zone basse de la butée, en fin de course, comme dans EP-B-0 545 765, on fait intervenir le soufflet ce qui permet de réduire la hauteur de la butée tout en conservant une course de compression suffisante pour assurer une bonne progressivité, grâce à l'intervention du soufflet.

Lorsque les plis du soufflet sont en contact ponctuel l'un contre l'autre, le soufflet peut encore être comprimé sur une certaine distance qui s'ajoute à la distance de compression de la butée.

La disposition du soufflet en série avec la butée de limitation de course, pour la transmission de l'effort de compression, permet d'améliorer la progressivité de la courbe des déplacements en fonction des efforts.

Le soufflet comporte, à son extrémité inférieure, une jupe munie en partie basse d'un bourrelet en saillie vers l'intérieur, et la collerette est fixée sur le cylindre, ou corps d'amortisseur, de manière à se trouver dans la jupe du soufflet et à y coulisser librement pour les petits débattements autour de la position moyenne du cylindre tandis que, pour des débattements plus importants éloignant le cylindre de la butée, la collerette vient accrocher le soufflet par son bourrelet et le tire vers le bas.

Selon une réalisation avantageuse, on prévoit un bol entourant la zone de liaison entre la partie butée et la partie soufflet, ledit bol étant soit accroché à ladite zone de liaison soit solidaire d'une coupelle où se loge la partie haute de la butée. Ce bol est constitué, de préférence, par un cylindre, en métal ou en matière plastique, dans la partie inférieure duquel le soufflet se range au moment de sa compression et dans la partie supérieure duquel la butée se range au moment de sa compression. En compression maximale, lorsque le bol est accroché à la zone de liaison entre la partie butée et la partie soufflet, le haut du bol se trouve à quelques millimètres du fond d'une coupelle, où se loge la partie haute de la butée.

L'invention consiste, mises à part les dispositions exposées ci-dessus, en un certain nombre d'autres dispositions, dont il sera plus explicitement question ci-après à propos d'un exemple de réalisation décrit en se référant au dessin annexé, mais qui n'est nullement limitatif.

Sur ce dessin :
- la figure 1 est une vue partielle en coupe verticale, avec parties en vue extérieure, d'un dispositif à butée de limitation de course selon l'invention, dans une position d'élongation relative ;
- la figure 2 montre, semblablement à la figure 1 mais avec partie du soufflet en vue extérieure, le dispositif de la figure 1 alors que le corps d'amortisseur s'est déplacé en direction de la butée, la collerette du corps d'amortisseur arrivant à mi-hauteur de la jupe du soufflet ;
- les figures 3 à 6 montrent des phases successives de compression du soufflet et de la butée lors de la course relative du corps d'amortisseur vers la butée ;
- la figure 7 est un diagramme donnant la course de compression de l'ensemble butée-soufflet portée en ordonnées et exprimée en millimètres, en fonction de la force de réaction de cet ensemble, portée en abscisses et exprimée en décanewtons.

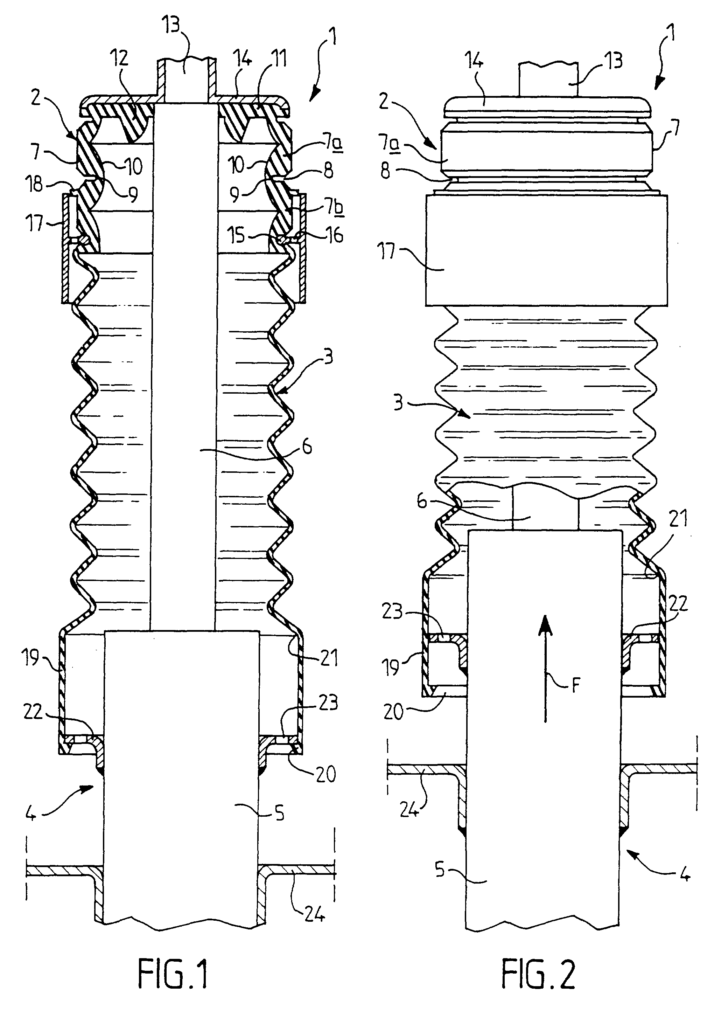

En se reportant à la figure 1, on peut voir un dispositif 1 à butée 2 de limitation de course associée à un soufflet protecteur 3. Le dispositif 1 est prévu sur un amortisseur 4 de véhicule comprenant un corps d'amortisseur 5, en forme de cylindre, et une tige d'amortisseur 6 dont une partie sort du corps 5 et dont l'autre partie peut coulisser dans celui-ci.

La butée 2, d'une seule pièce, est constituée par au moins un élément 7 en matière élastomère comportant, dans l'exemple représenté, deux couronnes 7a, 7b, cylindriques extérieurement, séparées par une gorge 8 limitant l'épaisseur radiale d'une zone 9, formant charnière. Cette zone 9 assure la continuité entre les deux couronnes 7a, 7b. La section de la surface interne de chaque couronne 7a, 7b de révolution, a sensiblement la forme d'un V ouvert tournant sa concavité vers l'axe des couronnes, la pointe du V étant sensiblement à mi-épaisseur de chaque couronne. Les branches du V sont convexes vers l'intérieur. La partie 10 de la surface interne de l'élément 7, s'étendant d'une pointe d'un V à l'autre, a une section transversale convexe en direction de l'axe de l'élément, le sommet de cette partie convexe étant situé au droit de la gorge 8.

La couronne supérieure 7a est solidaire, en partie haute, d'un chapeau 11 comportant un trou central de passage pour la tige 6 d'amortisseur. Ce chapeau 11 comporte, à l'intérieur, une nervure circulaire 12 à section transversale sensiblement en V tournant sa pointe vers le bas et entourant la tige 6. La branche intérieure du V de cette section est convexe vers l'intérieur.

La butée de limitation 7 est traversée axialement par la tige 6 laquelle comporte une partie d'extrémité supérieure 13, de diamètre plus faible, liée au châssis (non représenté) du véhicule. Une coupelle 14 est fixée sur la tige 6, contre l'épaulement situé à la base de l'extrémité 13. La coupelle 14 s'appuie contre une pièce (non montrée) du châssis par l'intermédiaire d'un organe élastique (non montré) de façon connue dans la technique. La butée 2 est ainsi maintenue, relativement au châssis, par l'appui constitué par la coupelle 14. Le bord périphérique de la coupelle 14 peut être rabattu vers le bas pour assurer le centrage et le maintien du chapeau 11.

Le soufflet 3, par son extrémité supérieure, est lié à l'élément 7 de la butée 2. De préférence, comme représenté sur le dessin, la butée 2 et le soufflet 3 sont réalisés d'une seule pièce dans la même matière élastomère, la jonction entre les deux éléments s'effectuant au niveau de la base de la couronne 7b. La paroi extérieure de cette couronne 7b, en partie basse, comporte une gorge périphérique dans laquelle sont encliquetés des renflements 15 prévus à l'extrémité de pattes 16 en saillie radiale à l'intérieur d'un bol 17 en forme de cylindre ouvert à chaque extrémité. Les pattes 16 sont fixées sensiblement à mi-longueur du bol 17 dont la moitié supérieure entoure la couronne 7b et la moitié inférieure entoure l'extrémité supérieure du soufflet 3. La couronne 7b comporte en outre, sur sa surface extérieure en partie haute, une lèvre périphérique 18 pouvant coopérer avec la surface interne du bol 17.

Le soufflet 3 s'étend vers le bas suivant des plis en zigzag et se termine, en partie basse, par une jupe cylindrique 19 qui entoure la partie haute du corps 5 d'amortisseur. L'extrémité inférieure de la jupe 19 comporte un bourrelet 20 en saillie radiale vers l'intérieur. Le diamètre de la jupe 19 est supérieur au diamètre extérieur du corps 5, et, dans l'exemple représenté, est supérieur au grand diamètre des plis du soufflet. La zone de raccordement entre la jupe 19 et la base du soufflet proprement dit est désignée par 21.

Le corps d'amortisseur comporte une collerette extérieure 22 fixée sur ce corps, notamment par soudage. Le diamètre extérieur de cette collerette 22 est légèrement inférieur au diamètre intérieur de la jupe 19 de sorte que cette collerette 22 peut coulisser librement dans la jupe 19, dans la partie comprise entre le bourrelet 20 et la zone 21. La collerette 22 comporte des trous 23 permettant un passage d'air lors des débattements.

La collerette 22 est positionnée sur le corps 5 de manière à accrocher le bourrelet 20 du soufflet et à étirer le soufflet vers le bas (voir figure 1), lorsque la roue (non représentée) associée à l'amortisseur 4 effectue un débattement vers le bas relativement important. En position moyenne du corps 5, la collerette 22 se trouve sensiblement à mi-longueur de la jupe 19 (voir figure 2), de façon à coulisser librement par rapport au soufflet 3, sans entraîner ce dernier, pour les petits débattements. La longueur de la jupe 19 est déterminée en conséquence. Ainsi, le soufflet 3 ne travaille pas lors de ces faibles débattements.

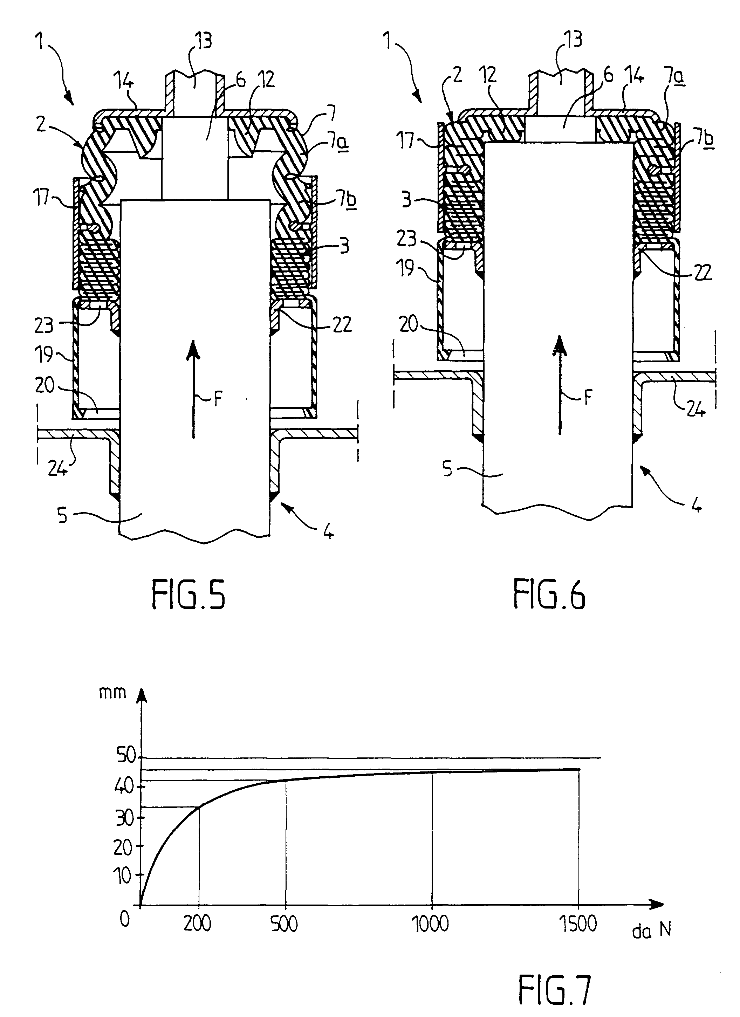

Le corps d'amortisseur 5 est, en outre, lié à un élément 24 situé à un niveau suffisamment bas pour ne pas interférer avec le bas de la jupe 19 dans la position de compression maximale du soufflet et de la butée illustrée sur la figure 6.

Le collerette 22 est prévue pour venir en butée contre la zone 21 du soufflet lorsque la course du cylindre 5 en direction de la butée 2 atteint une valeur prédéterminée.

La transmission de l'effort de compression du cylindre 5 à la butée 2 de limitation de course s'effectue par l'intermédiaire du soufflet 3, en série avec la butée 2.

Les différentes phases du fonctionnement, lors d'une course de compression du corps d'amortisseur 5 vers la butée 2, sont expliquées en se référant aux figures 2 à 6.

Dans la position de la figure 2, le corps d'amortisseur 5, qui se déplace suivant le sens de la flèche F en direction de la butée 2, a atteint par sa collerette 22 la zone médiane de la jupe 19 du soufflet 3, lequel n'est pas encore comprimé.

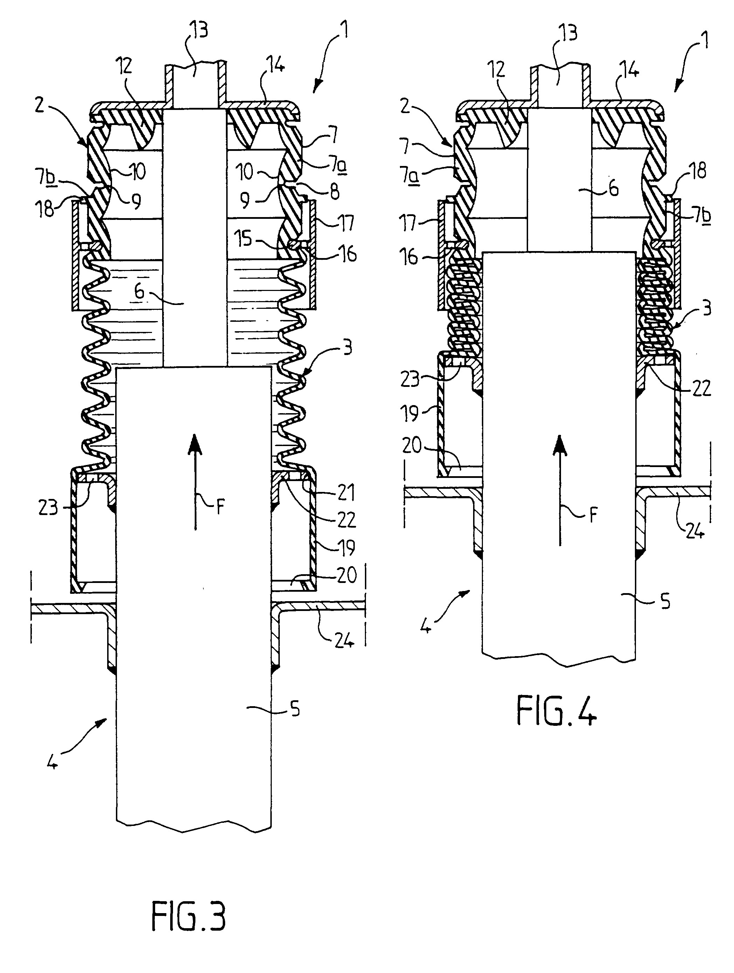

En poursuivant sa course relative selon la flèche F, le corps d'amortisseur 5 provoque par sa collerette 22 la compression du soufflet 3 la fermeture progressive de ses plis, comme illustré sur la figure 3. Au cours de cette phase, la force de réaction exercée par les plis du soufflet 3 est relativement faible, et n'a pratiquement pas d'influence sur la hauteur de la butée de limitation 2.

Pour une course suffisante, correspondant à la position illustrée sur la figure 4, les plis du soufflet viennent en contact ponctuel l'un contre l'autre.

La course du corps d'amortisseur 5 peut se poursuivre avec la compression des plis jointifs du soufflet 3 et de la butée de limitation 2, comme illustré sur la figure 5.

En compression maximale du soufflet 3 et de la butée 2 (figure 6), l'extrémité supérieure du corps d'amortisseur 5 vient écraser la nervure 12. Le bord supérieur du bol 17 se trouve à une faible distance, de l'ordre de quelques millimètres, du fond de la coupelle 14 où se loge la partie haute de la butée 2.

Dans cette situation de compression maximale, les plis du soufflet 3 sont logés dans la partie inférieure du bol 17 tandis que la butée 2 comprimée est rangée dans la partie supérieure de ce bol 17. La jupe 19 reste totalement libre vis-à-vis des efforts de compression.

Lorsque les plis du soufflet viennent en contact ponctuel l'un contre l'autre, comme illustré sur la figure 4, le soufflet 3 peut être encore comprimé sur une distance non négligeable, de l'ordre de 10 mm dans l'exemple considéré. La butée 2, dans cet exemple, a une hauteur à l'état libre (figure 1) de 50 mm, et peut être comprimée à 50% (compression maximale de la figure 6) ; la butée 2 a alors une hauteur résiduelle de 25 mm.

La course de compression du soufflet 3 et de la butée 2 en série est égale à la somme de ces deux courses individuelles, soit 35 mm. Une telle course de compression correspondrait à une compression de 70 % pour une butée de 50 mm qui serait attaquée directement en compression par le corps d'amortisseur, comme dans l'état de la technique. Une telle compression de 70 % dépasse largement les possibilités techniques actuelles.

La figure 7 est un diagramme illustrant la variation de la course de compression, portée en ordonnées et exprimée en mm (millimètres), en fonction de la force de réaction axiale portée en abscisses, et exprimée en décanewtons (daN) d'un ensemble de soufflet 3 et de butée 2 selon l'invention. Pour une course de compression d'environ 32 mm, la force de réaction est de 200 daN.

La courbe de la figure 7 traduit la progressivité de l'amortissement. Cette progressivité est d'autant meilleure que l'angle entre la tangente à l'origine de la courbe et l'axe des ordonnées est faible. La compression initiale du soufflet 3, moins rigide au début que la butée 2, permet d'améliorer considérablement la progressivité. L'énergie absorbée par l'ensemble du soufflet 3 et de la butée 2 est représentée par la surface comprise entre la courbe de la figure 7 et l'axe des ordonnées.

Ainsi, selon l'invention, en faisant entrer le soufflet 3 dans la fonction butée, on peut réduire la hauteur initiale de la butée 2 et donc sa hauteur résiduelle tout en conservant et même améliorant la progressivité de l'absorption d'énergie.

## Revendications

1. Dispositif à butée (2) de limitation de course associée à un soufflet protecteur (3), dispositif dans lequel la butée de limitation comporte au moins un élément élastique de compression (7) traversé par une tige (6) liée, à une extrémité, à un bâti, tandis que, du côté de son autre extrémité, la tige (6) peut coulisser dans un cylindre (5) relié à un organe susceptible de se déplacer relativement au bâti, une extrémité du soufflet protecteur étant liée à la butée, ladite butée (2) étant propre à limiter la course du cylindre (5) en direction du bâti et à exercer une force de réaction sur ce cylindre en fin de course, **caractérisé par le fait que** la butée est maintenue par rapport au bâti par un appui (14), l'autre extrémité du soufflet pouvant être entraînée par le cylindre lors des débattements, afin de rester autour de la tige quelle que soit l'amplitude du débattement, l'effort de compression de la butée (2) en fin de course étant transmis du cylindre (5) à la butée par l'intermédiaire du soufflet (3), le cylindre (5) comportant une collerette extérieure (22) disposée de manière à pousser l'extrémité (21) du soufflet éloignée de la butée (2) et à comprimer progressivement le soufflet pour assurer la transmission de l'effort de compression par le soufflet à la butée.

2. Dispositif selon la revendication 1 pour amortisseur de véhicule, **caractérisé par le fait que** le cylindre (5) est constitué par le corps d'amortisseur et la tige (6) par celle de l'amortisseur.

3. Dispositif selon l'une des revendications 1 à 2, **caractérisé par le fait que** le soufflet (3) est prévu pour être comprimé sur une certaine distance lorsque les plis du soufflet sont en contact ponctuel l'un contre l'autre.

4. Dispositif selon l'une des revendications 1 à 3, **caractérisé par le fait que** le soufflet (3) est disposé en série avec la butée (2) de limitation de course pour la transmission de l'effort de compression.

5. Dispositif selon l'une des revendications 1 à 4, **caractérisé par le fait que** le soufflet (3) comporte à son extrémité inférieure une jupe (19) munie en partie basse d'un bourrelet (20) en saillie vers l'intérieur, et que la collerette (22) est fixée sur le cylindre (5), ou corps d'amortisseur, de manière à se trouver dans la jupe (19) du soufflet et à y coulisser librement pour les petits débattements autour de la position moyenne du cylindre, tandis que, pour des débattements plus importants éloignant le cylindre de la butée, la collerette (22) vient accrocher le soufflet par son bourrelet (20) et le tire vers le bas.

6. Dispositif selon l'une des revendications 1 à 5, **caractérisé par le fait qu'**un bol (17) entoure la zone de liaison entre la partie butée (2) et la partie soufflet (3), ledit bol (17) étant soit accroché à ladite zone de liaison soit solidaire d'une coupelle (14) où se loge la partie haute (11) de la butée (2).

7. Dispositif selon la revendication 6, **caractérisé par le fait que** le bol (17) est constitué par un cylindre dans la partie inférieure duquel le soufflet (3) se range au moment de sa compression et dans la partie supérieure duquel la butée (2) se range au moment de sa compression.

8. Dispositif selon la revendication 7, dans lequel le bol (17) est accroché à la zoner de liaison entre la partie butée (2) et la partie soufflet (3), **caractérisé par le fait qu'**en compression maximale, le haut du bol (17) se trouve à une faible distance du fond de la coupelle (14), où se loge la partie haute (11) de la butée (2).

## Patentansprüche

1. Vorrichtung mit Hub-Begrenzungsanschlag (2), zu dem ein Schutzbalg (3) gehört, wobei der Begrenzungsanschlag mindestens ein elastisches komprimierbares Element (7) aufweist, das von einer Stange (6) durchquert wird, welche an einem Ende mit einem Gestell verbunden ist und auf der Seite ihres anderen Endes in einem Zylinder (5) gleiten kann, der mit einem Organ verbunden ist, das sich gegenüber dem Gestell bewegen kann, wobei ein Ende des Schutzbalgs mit dem Anschlag verbunden ist und der Anschlag (2) den Hub des Zylinders (5) in Richtung des Gestells begrenzen und eine Reaktionskraft auf den Zylinder am Ende des Hubs ausüben kann,
**dadurch gekennzeichnet, dass**
der Anschlag bezüglich des Gestells von einer Abstützung (14) gehalten wird, wobei das andere Ende des Balgs bei den Federbewegungen vom Zylinder mitgenommen werden kann, um unabhängig von der Größe der Federbewegung um die Stange herum angeordnet zu bleiben, wobei die Kraft, die die Kompression des Anschlags (2) bewirkt, am Ende des Hubs über den Balg (3) vom Zylinder (5) auf den Anschlag übertragen wird und der Zylinder (5) einen äußeren Kragen (22) aufweist, der derart angeordnet ist, dass er das vom Anschlag (2) entfernte Ende (21) des Balgs bewegt und den Balg nach und nach komprimiert und die Übertragung der die Kompression bewirkenden Kraft vom Balg auf den Anschlag sicherstellt.

2. Vorrichtung nach Anspruch 1 für Fahrzeugstoßdämpfer, **dadurch gekennzeichnet, dass** der Zylinder (5) vom Körper des Stoßdämpfers und die Stange (6) von derjenigen des Stoßdämpfers gebildet wird.

3. Vorrichtung nach Anspruch 1 oder 2, **dadurch gekennzeichnet, dass** der Balg (3) dazu vorgesehen ist, auf eine bestimmte Länge komprimiert zu werden, wenn die Falten des Balgs in punktuellem Kontakt miteinander stehen.

4. Vorrichtung nach einem der Ansprüche 1 bis 3, **dadurch gekennzeichnet, dass** der Balg (3) zur Übertragung der die Kompression bewirkenden Kraft in direkter Abfolge mit dem Anschlag (2) zur Begrenzung des Hubs angeordnet ist.

5. Vorrichtung nach einem der Ansprüche 1 bis 4, **dadurch gekennzeichnet, dass** der Balg (3) an seinem unteren Ende eine Schürze (19) aufweist, die im unteren Abschnitt mit einer nach innen vorstehenden Verdickung (20) versehen ist, und dass der Kragen (22) am Zylinder (5) oder Körper des Stoßdämpfers derart befestigt ist, dass er sich in der Schürze (19) des Balgs befindet und dort bei kleinen Federbewegungen um die mittlere Position des Zylinders frei gleitet, während der Kragen (22) den Balg bei größeren Federbewegungen, die den Zylinder vom Anschlag entfernen, an seiner Verdickung (20) festhält und nach unten zieht.

6. Vorrichtung nach einem der Ansprüche 1 bis 5, **dadurch gekennzeichnet, dass** ein Napf (17) den Verbindungsbereich zwischen dem Anschlagteil (2) und dem Balgteil (3) umgibt, wobei der Napf (17) entweder am Verbindungsbereich festgehalten wird oder mit einer Kupelle (14) fest verbunden ist, in welcher der obere Abschnitt (11) des Anschlags (2) untergebracht ist.

7. Vorrichtung nach Anspruch 6, **dadurch gekennzeichnet, dass** der Napf (17) von einem Zylinder gebildet wird, in dessen unteren Abschnitt sich der Balg (3) im Moment seiner Kompression einfügt und in dessen oberem Abschnitt sich der Anschlag (2) im Moment seiner Kompression einfügt.

8. Vorrichtung nach Anspruch 7, bei der der Napf (17) am Verbindungsbereich zwischen dem Anschlagteil (2) und dem Balgteil (3) festgehalten wird, **dadurch gekennzeichnet, dass** sich die Oberseite des Napfes (17) bei maximaler Kompression in einem geringen Abstand vom Boden der Kupelle (14) befindet, in welcher der obere Abschnitt (11) des Anschlags (2) untergebracht ist.

## Claims

1. A stop device (2) for limiting the travel associated with a protective bellows (3), in this device the limiting stop having at least one resilient compression element (7) through which there passes a rod (6) connected at one end to a frame, while at its other end the rod (6) can slide in a cylinder (5) connected to a member capable of displacement in relation to the frame, one end of the protective bellows being connected to the stop, the said stop (2) being intended to limit the travel of the cylinder (5) in the direction of the frame and to exert a reaction force on this cylinder at the end of its travel, **characterised in that** the stop is held relative to the frame by a support (14), the other end of the bellows being entrainable by the cylinder when there is deflection in order to remain around the rod whatever the amplitude of deflection, the force of compression of the stop (2) at the end of travel being transmitted from the cylinder (5) to the stop by way of the bellows (3), the cylinder (5) having an external collar (22) disposed such that the end (21) of the bellows remote from the stop (2) is pushed and the bellows is compressed progressively in order to ensure that the force of compression is transmitted through the bellows to the stop.

2. A device according to Claim 1 for a vehicle shock absorber, **characterised in that** the cylinder (5) is formed by the body of the shock absorber and the rod (6) by that of the shock absorber.

3. A device according to either of Claims 1 or 2, **characterised in that** the bellows (3) is provided in order to be compressed over a certain distance when the folds of the bellows are in point contact with one another.

4. A device according to one of Claims 1 to 3, **characterised in that** the bellows (3) is disposed in series with the stop (2) for limiting travel in order to transmit the force of compression.

5. A device according to one of Claims 1 to 4, **characterised in that** the bellows (3) has at its lower end a skirt (19) equipped in its lower part with an inwardly projecting flange element (20), and **in that** the collar (22) is fixed to the cylinder (5), or body of the shock absorber, such that it is located inside the skirt (19) of the bellows and slides freely there for small deflections around the central position of the cylinder whereas, for more sizeable deflections separating the cylinder from the stop, the collar (22) hooks onto the bellows by means of its flange element (20) and draws it downwards.

6. A device according to one of Claims 1 to 5, **characterised in that** a bowl (17) surrounds the zone connecting the stop part (2) and the bellows part (3), the said bowl (17) being either hooked to the said connecting zone or integrally formed on a cup (14) where the top part (11) of the stop (2) is housed.

7. A device according to Claim 6, **characterised in that** the bowl (17) is formed by a cylinder, in the lower part whereof the bellows (3) is accommodated during its compression, and in the upper part whereof the stop (2) is accommodated during its compression.

8. A device according to Claim 7, in which the bowl (17) is hooked onto the zone connecting the stop part (2) and the bellows part (3), **characterised in that** at maximum compression the top of the bowl (17) is located a short distance away from the base of the cup (14) where the top part (11) of the stop (2) is housed.
